# EUROPÄISCHE PATENTANMELDUNG

(11) **EP 2 733 026 A2**
(43) Veröffentlichungstag der Anmeldung: **21.05.2014**
(21) Anmeldenummer: 13193110.7
(22) Anmeldetag: 15.11.2013
(51) Int. Cl.: B60S 1/34, B60S 1/04

(54) **Scheibenwischarm mit einem Aktuator**

(30) Priorität: 19.11.2012 DE 102012221086
(71) Anmelder: ROBERT BOSCH GMBH, 70442 Stuttgart (DE)
(72) Erfinder: Van De Rostyne, Kris, 3360 Opvelp (BE); Hauser, Florian, 77855 Achern (DE); Weiler, Michael, 77815 Buehl (DE)

(57) **Zusammenfassung**

Die vorliegende Erfindung betrifft einen Scheibenwischarm (2) für ein Fahrzeug (10), insbesondere ein Kraftfahrzeug. Der Scheibenwischarm (2) weist ein Einstellelement (20, 34, 42) zum Einstellen einer vom Scheibenwischarm (2) ausübbaren Armkraft auf und ist so ausgestaltet, dass die Armkraft mittels eines Aktuators (20, 34, 54) einstellbar ist.

## Beschreibung

Die vorliegende Erfindung betrifft einen Scheibenwischarm für ein Fahrzeug, insbesondere ein Kraftfahrzeug, wobei der Scheibenwischarm ein Einstellelement zum Einstellen einer vom Scheibenwischarm ausübbaren Armkraft aufweist.

### Stand der Technik

Herkömmliche Scheibenwischarme weisen ein Befestigungsteil zum Befestigen des Scheibenwischarms an einem Wischantrieb und ein Gelenkteil auf, das mittels eines Drehgelenks an dem Befestigungsteil befestigt ist. Als Einstellelement zum Einstellen einer vom Scheibenwischarm ausübbaren Armkraft dient eine Zugfeder, deren eines Ende an dem Befestigungsteil und deren anderes Ende an dem Gelenkteil befestigt ist. Die Zugfeder ist so angeordnet, dass sie eine Armkraft ausübt, mit der sie das Gelenkteil in Richtung einer zu wischenden Scheibe des Fahrzeugs zieht. Dabei sind die Federachse der Zugfeder und die Drehachse des Gelenkteils voneinander beabstandet, so dass sich ein Federhebel der Zugfeder bildet. Ein an dem Scheibenwischarm angebrachtes Wischblatt liegt unter der von der Zugfeder ausgeübten Armkraft an der Scheibe an. Zum Einstellen der Armkraft werden verschiedene Parameter festgelegt. Solche Parameter sind beispielsweise die Federkonstante der Zugfeder, die Auslenkung der Zugfeder und der Federhebel. Üblicherweise werden diese Parameter aufgrund der konstruktiven Ausgestaltung und Projektierung des Scheibenwischarms einmalig festgelegt. Eine Veränderung der Parameter ist üblicherweise nicht vorgesehen. Eine Veränderung der Armkraft erfolgt bei herkömmlichen Scheibenwischarmen nur durch manuelle Veränderung der Position des Scheibenwischarms, beispielsweise in eine Ruheposition, in der er von der Scheibe abgeklappt ist.

### Offenbarung der Erfindung

Es ist die Aufgabe der vorliegenden Erfindung, ein Einstellen einer geeigneten Armkraft eines Scheibenwischarms auf einfache Weise zu ermöglichen.

Diese Aufgabe wird durch einen Scheibenwischarm mit den Merkmalen gemäß Anspruch 1 gelöst.

Gemäß einer Ausführungsform der vorliegenden Erfindung wird ein Scheibenwischarm vorgeschlagen, der so ausgestaltet ist, dass die Armkraft mittels eines Aktuators einstellbar ist.

Bevorzugte Ausführungsformen und besondere Aspekte der Erfindung ergeben sich aus den abhängigen Ansprüchen, den Zeichnungen und der vorliegenden Beschreibung.

### Vorteile der Erfindung

Die vorliegende Erfindung und ihre Ausführungsformen ermöglichen vorteilhafterweise eine optimierte Einstellung der Armkraft und eine gute Reinigungsleistung eines Scheibenwischers, der den erfindungsgemäßen Scheibenwischarm aufweist. Unter dem Begriff Aktuator wird hier allgemein ein Element verstanden, das in einer Steuer- oder Regelstrecke in Energie- und/oder Masseströme eingreifen und/oder in einem Ansteuersignal für den Aktuator enthaltene Angaben in mechanische Bewegung oder eine andere physikalische Größe, wie z. B. Druck oder Temperatur, umsetzen oder wandeln kann. Gleichbedeutend mit dem Begriff Aktuator sind die Begriffe Aktor und Stellglied verwendbar. Der Aktuator ist insbesondere ein Teil des erfindungsgemäßen Scheibenwischarms. Aufgrund der vorliegenden Erfindung ist vorteilhafterweise ein automatisiertes Einstellen und Verändern der Armkraft möglich. Es ist vorteilhafterweise möglich, die mittels des Aktuators eingestellte Armkraft zu steuern. Es ist vorteilhafterweise auch möglich, die Armkraft, insbesondere mittels eines geschlossenen Regelkreises, zu regeln, in dem der Aktuator enthalten ist.

Gemäß einer Ausführungsform der Erfindung ist der Scheibenwischarm so ausgestaltet, dass das Einstellen oder Verändern der Armkraft mittels des Aktuators während eines Betriebs des Fahrzeugs erfolgt. Besonders vorteilhaft ist der erfindungsgemäße Scheibenwischarm so ausgestaltet, dass die Armkraft mittels des Aktuators in Abhängigkeit von einem Ansteuersignal einstellbar ist. Des Weiteren weist der Aktuator vorteilhafterweise eine Empfangsschnittstelle zum Empfangen des Ansteuersignals auf, das insbesondere ein elektrisches Ansteuersignal ist. Ein solches Signal kann besonders einfach übertragen und verarbeitet werden. Das Ansteuersignal ist dem Aktuator zuführbar. Vorteilhafterweise kann die Armkraft mittels des Ansteuersignals für den Aktuator eingestellt, verändert und an bestimmte Verhältnisse angepasst werden. Dies kann, sofern gewünscht oder erforderlich, insbesondere jederzeit erfolgen. Der Scheibenwischarm ist vorteilhafterweise so ausgestaltet, dass die Armkraft mittels des Aktuators in Richtung einer Scheibe des Fahrzeugs ausübbar ist. Bei einer Ausführungsform eines Scheibenwischers, der an dem Fahrzeug montiert ist und der eine Ausführungsform des erfindungsgemäßen Scheibenwischarms aufweist, an dem ein Wischblatt befestigt ist, wird die von dem Scheibenwischarm ausübbare Armkraft in eine Auflagekraft überführt, mit der das Wischblatt auf der Scheibe des Fahrzeugs aufliegt. Mittels des Einstellens der Armkraft wird somit bei aufliegendem Wischblatt vorteilhafterweise auch diese Auflagekraft eingestellt. Gemäß einer weiteren Ausführungsform der Erfindung kann ein Sensor eingesetzt werden, mit dem insbesondere die ordnungsgemäße Funktionsweise des Aktuators und/oder die tatsächlich vorhandene Armkraft festgestellt wird. Der festgestellt Wert kann zum Ansteuern des Aktuators verwendet werden. Der Sensor kann beispielsweise in den Aktuator integriert sein. Es ist allerdings ebenso möglich, einen vom Aktuator getrennt angeordneten Sensor einzusetzen.

Gemäß einer weiteren typischen Ausführungsform ist der Scheibenwischarm so ausgestaltet, dass die Armkraft abhängig von einem Zustand des Scheibenwischarms und/oder des Fahrzeugs einstellbar ist. Dadurch lässt sich vorteilhafterweise die Armkraft optimal auf den Zustand einstellen, da für verschiedene Zustände des Scheibenwischarms und/oder des Fahrzeugs unterschiedliche Armkräfte sinnvoll und vorteilhaft sind. Die Zustände können beispielsweise mittels eines Erfassungsmittels zum Erfassen des Zustands ermittelt werden, dass z. B. ein Sensor sein kann. Es ist ebenso möglich, im Fahrzeug bereits für andere Zwecke sowieso erfasste Größen und/oder Signale zum Feststellen des Zustands heranzuziehen, um damit die Armkraft in geeigneter Weise einzustellen oder zu verändern. Vorteilhafterweise enthält das Ansteuersignal Informationen über den Zustand des Scheibenwischarms und/oder des Fahrzeugs.

Gemäß einer weiteren typischen Ausführungsform ist der Scheibenwischarm so ausgestaltet, dass die Armkraft abhängig von einem Wischwinkel und/oder einer Fahrgeschwindigkeit des Fahrzeugs einstellbar ist. Angaben über den Wischwinkel und/oder die Fahrgeschwindigkeit sind vorteilhafterweise in dem Ansteuersignal enthalten. Eine Information über den Wischwinkel kann dazu eingesetzt werden, Wendelagen des Scheibenwischarms festzustellen, um die Armkraft in diesen Wendelagen zu reduzieren und niedrig einzustellen. Dadurch kann der Umlegevorgang beim Verändern der Wischrichtung verbessert, insbesondere vereinfacht, werden und eine Belastung eines an dem Scheibenwischarm befestigten Wischblatts, vor allem dessen Wischgummis, beim Wenden gering gehalten werden. Ferner kann eine Ratterneigung des Wischblatts und damit eine Geräuschentwicklung vorteilhafterweise verhindert werden. Dies gilt insbesondere bei einem Einsatz des erfindungsgemäßen Scheibenwischarms in Kombination mit einem Reversierantrieb. Eine Information über die Fahrgeschwindigkeit kann dazu eingesetzt werden, bei hohen Fahrgeschwindigkeiten die Armkraft zu erhöhen, um ein mögliches Abheben des Scheibenwischarms und/oder eines an ihm befestigten Wischblatts zu vermeiden.

Gemäß einer weiteren typischen Ausführungsform weist das Einstellelement den Aktuator auf. Dadurch ist der Aktuator vorteilhafterweise direkt als Einstellelement einsetzbar und die Anzahl notwendiger Bauteile kann gering gehalten werden. Insbesondere durch den Aktuator selbst ist das Ausüben der Armkraft durch den Scheibenwischarm aktiv veranlassbar.

Gemäß einer weiteren vorteilhaften Ausführungsform weist der Scheibenwischarm ein Befestigungsteil zum Befestigen des Scheibenwischarms an einem Wischantrieb und ein Gelenkteil auf, das gelenkig an dem Befestigungsteil angebracht ist. Der Aktuator ist zwischen dem Befestigungsteil und dem Gelenkteil angeordnet. Durch diese Ausgestaltung ist auf besonders einfache Weise die Armkraft durch den Scheibenwischarm ausübbar.

Gemäß einer weiteren Ausführungsform ist der Aktuator als Gelenk ausgestaltet. Der Aktuator kann somit vorteilhafterweise zwei Funktionen gleichzeitig ausführen, nämlich die des Gelenks und die des Einstellelements. Insbesondere ist der Aktuator als biegefähiger Balken, d. h. als Biegebalken, ausgestaltet.

Gemäß einer weiteren vorteilhaften Ausführungsform ist der Aktuator parallel zu einem Gelenk angeordnet, das zwischen dem Befestigungsteil und dem Gelenkteil vorhanden ist. Diese Ausführung ist vorteilhafterweise besonders kompakt. Als Aktuator ist insbesondere ein linearer Aktuator einsetzbar, der so ausgestaltet ist, dass seine Länge veränderbar ist. Der lineare Aktuator kann kontrahieren und expandieren. Als Gelenk kann einfachheitshalber mittels eines Biegebalkens realisiert werden.

Gemäß einer weiteren Ausführungsform ist der Aktuator so ausgebildet und angeordnet, dass er zum Einstellen der Armkraft auf das Einstellelement wirkt. Gemäß dieser Ausgestaltung sind der Aktuator und das Einstellelement zwei getrennte Bauteile des erfindungsgemäßen Scheibenwischarms. Für die unterschiedlichen Funktionen, die sie erfüllen, können sie daher vorteilhafterweise jeweils optimiert ausgestaltet werden.

Gemäß einer weiteren Ausführungsform weist der Scheibenwischarm ein Befestigungsteil zum Befestigen des Scheibenwischarms an einem Wischantrieb und ein Gelenkteil auf, das gelenkig an dem Befestigungsteil angebracht ist. Ferner weist das Einstellelement eine Zugfeder auf, die an dem Befestigungsteil und dem Gelenkteil befestigt ist. Dabei ist der Aktuator so ausgebildet und angeordnet, dass zum Einstellen der Armkraft ein Parameter der Zugfeder mittels des Aktuators einstellbar ist, der durch eine Anordnung und/oder eine Ausgestaltung der Zugfeder festgelegt ist. Ein solcher Parameter ist beispielsweise eine Federauslenkung der Zugfeder oder ein Federhebel der Zugfeder. Durch ein Einstellen oder Verändern der Federauslenkung der Zugfeder ist deren Federspannung einstell- und/oder veränderbar. Dies bewirkt auf einfache Weise das Einstellen und/oder Verändern der Armkraft durch den erfindungsgemäßen Scheibenwischarm. Ferner ist es möglich, herkömmliche Scheibenwischerarme, die bereits mit einer Zugfeder als Einstellelement ausgestattet sind, konstruktiv auf einfache Weise um den Aktuator und dessen Funktionalität zu erweitern. In einer besonders vorteilhaften Ausführung der Erfindung ist der Aktuator so angeordnet und ausgestaltet, dass eine Befestigungsposition der Zugfeder an dem Befestigungsteil einstell- und veränderbar ist. In einer weiteren Ausführungsform wirkt der Aktuator auf einen drehbar gelagerten Exzenter, an dem die Zugfeder befestigt ist. Der Aktuator ist dabei insbesondere als linearer Aktuator ausgestaltet, dessen Längenänderung ein Verdrehen des Exzenters bewirkt. Dadurch wird ein Einstellen und/oder Verändern des Federhebels erreicht.

Gemäß einer weiteren Ausführungsform ist der Scheibenwischarm so ausgestaltet, dass er mittels des Aktuators in eine Ruheposition bringbar ist, in der er von der Scheibe des Fahrzeugs weggeklappt ist. Vorteilhafterweise ist der Scheibenwischarm in der Ruheposition ferner so ausgestaltet, dass eine hohe Armkraft zum Halten des Scheibenwischarms in der Ruheposition einstellbar ist. Die Ruheposition entspricht insbesondere einer Park- oder Serviceposition. Sofern an dem erfindungsgemäßen Scheibenwischarm ein Wischblatt angebracht ist, ist dieses in der Ruheposition von der zu wischenden Scheibe beabstandet. Vorteilhafterweise ist die Ruheposition des Scheibenwischarms automatisiert einstellbar. Dazu können bestimmte vorgegebene Kriterien vorhanden sein, bei deren Vorliegen der Scheibenwischarm automatisch in die Ruheposition gebracht wird. Ein solches vorgegebenes Kriterium kann beispielsweise das Ausschalten eines Motors eines Kraftfahrzeugs sein, an dem der Scheibenwischarm installiert ist. Besonders vorteilhaft kann das Ausschalten des Motors mit anderen vorgegebenen Kriterien, wie z. B. dem Vorhandensein einer bestimmten Außentemperatur, kombiniert sein. Der so ausgestaltete erfindungsgemäße Scheibenwischarm kann somit z. B. im Winter bei Ausschalten des Motors automatisch in die Ruheposition gebracht werden.

Eine weitere Ausführung des erfindungsgemäßen Scheibenwischarms ist vorteilhafterweise so ausgestaltet, dass der Aktuator so ausgestaltet, dass seine Form veränderbar ist. Ein solches Verändern der Form ist insbesondere ein Verändern seiner Länge oder ein Verbiegen des Aktuators. Ferner ist ein solcher Aktuator vorteilhafterweise so angeordnet, dass durch das Verändern seiner Form das Einstellen und/oder Verändern der Armkraft bewirkt. Weist der erfindungsgemäße Scheibenwischarm ein Gelenkteil auf, das gelenkig an einem Befestigungsteil angeordnet ist, so ist der Aktuator in einer weiteren Ausführungsform so ausgestaltet und angeordnet, dass das Gelenkteil mittels des Veränderns der Form des Aktuators gegenüber dem Befestigungsteil verdrehbar ist.

### Kurze Beschreibung der Zeichnungen

Ausführungsbeispiele der Erfindung sind in den Figuren dargestellt und werden im Folgenden näher beschrieben. Es zeigen:
Figur 1A-C schematische Darstellungen eines Ausführungsbeispiels eines erfindungsgemäßen Scheibenwischarms mit einem biegbaren Aktuator, der als Gelenk ausgestaltet ist,
Figur 2A-C schematische Darstellungen eines weiteren Ausführungsbeispiels eines erfindungsgemäßen Scheibenwischarms mit einem Aktuator, dessen Länge veränderbar ist, und einem parallelen biegbaren Gelenk und
Figur 3A, B schematische Darstellungen eines weiteren Ausführungsbeispiels eines erfindungsgemäßen Scheibenwischarms mit einem Aktuator, der auf eine als Einstellelement dienende Zugfeder wirkt.

### Ausführungsformen der Erfindung

Im Folgenden werden, sofern nicht anders vermerkt, für gleiche und gleichwirkende Elemente gleiche Bezugszeichen verwendet.

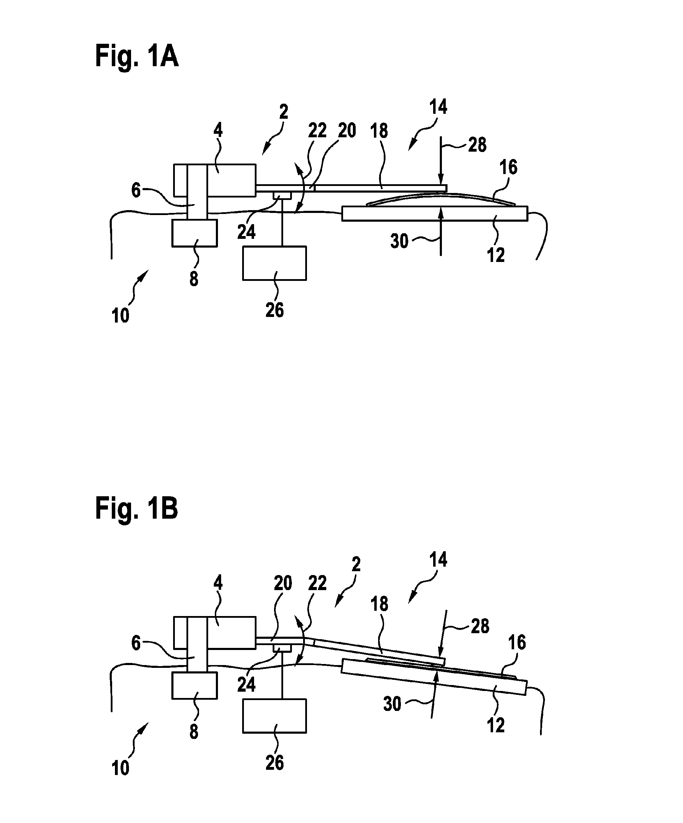

Figur 1A zeigt eine schematische Darstellung eines Ausführungsbeispiels eines erfindungsgemäßen Scheibenwischarms 2. Der Scheibenwischarm 2 weist ein Befestigungsteil 4 auf, mit dem er an einer Antriebsachse 6 eines Scheibenwischantriebs 8 eines Kraftfahrzeugs 10 angebracht ist. Der Scheibenwischantrieb 8 ist hier ein Reversierantrieb. Das Kraftfahrzeug 10 weist eine Scheibe 12 auf, die hier eine Frontscheibe eines Autos ist. Der Scheibenwischarm 2 ist ein Teil eines Scheibenwischers 14, der zum Wischen der Scheibe 12 dient. Der Scheibenwischer 14 weist ein biegbares Wischblatt 16 auf, das mittels einer Halterung an einem dem Befestigungsteil 4 abgewandten Ende eines langgestreckten Gelenkteils 18 des Scheibenwischarms 2 befestigt ist. Das Gelenkteil 18 ist gelenkig mit dem Befestigungsteil 4 verbunden. Im vorliegenden Ausführungsbeispiel ist ein biegbarer Aktuator 20 zwischen Gelenkteil 18 und Befestigungsteil 4 vorhanden, der als Gelenk dient und entsprechend ausgestaltet ist. Der Aktuator 20 ist in Richtung der Scheibe 12 und in Richtung von der Scheibe 12 weg biegbar. Dies ist in der Fig. 1A durch einen Pfeil 22 angedeutet, der in die beiden einander entgegengesetzten Richtungen weist. Der Aktuator 20 enthält eine Empfangsschnittstelle 24 zum Empfangen eines Ansteuersignals. Dazu ist die Empfangsschnittstelle 24 mit einer Steuerung 26 verbunden, die das Ansteuersignal in Abhängigkeit von Eingangssignalen erzeugt, die ihr zugeführt werden, und an den Aktuator 20 überträgt. Abhängig von dem Ansteuersignal stellt der Aktuator 20 seine Biegung ein. Das Ansteuersignal ist hier ein elektrisches Signal, das über ein Kabel von der Steuerung 26 zur Empfangsschnittstelle 24 des Aktuators 20 übermittelt wird. Die Steuerung 26 ist im vorliegenden Ausführungsbeispiel im Kraftfahrzeug 10 angeordnet. Es ist allerdings ebenso möglich, die Steuerung 26 im Scheibenwischarm 2 vorzusehen.

Im Ausführungsbeispiel gemäß Fig. 1A stellt der Aktuator 20 ein Einstellelement zum Einstellen einer vom Scheibenwischarm 2 ausübbaren Armkraft dar. Der Scheibenwischarm 2 übt die Armkraft in Richtung der Scheibe 12 aus, um das Wischblatt 16 auf die Scheibe 12 zu drücken. Die vom Scheibenwischarm ausgeübte Armkraft wird in der Fig. 1A durch einen Pfeil 28 angedeutet. Die von dem Scheibenwischarm 2 ausgeübte Armkraft 28 wird, sofern das Wischblatt 16 auf der Scheibe 12 aufliegt, in eine Druckkraft oder Auflagekraft überführt, mit der das Wischblatt 16 auf die Scheibe 12 drückt bzw. auf der Scheibe 12 aufliegt. Dies ist in der Fig. 1A durch einen Pfeil 30 angedeutet. Die Höhe der durch den Scheibenwischarm 2 ausgeübten Armkraft 28 wird durch den Grad der Biegung des Aktuators 20 eingestellt. Je mehr der Aktuator 20 in Richtung der Scheibe 12 gebogen ist, umso größer ist die Armkraft 28 eingestellt.

Dies ist in der Fig. 1B dargestellt, die den Scheibenwischarm 2 nach Fig. 1A in einer veränderten Position zeigt. In der Fig. 1B ist der Aktuator 20 des Scheibenwischarms 2 aufgrund einer geeigneten Ansteuerung durch die Steuerung 26 stärker in Richtung der Scheibe 12 gebogen. Dies bewirkt, dass das Gelenkteil 18 mit dem daran befestigten Wischblatt 16 ebenfalls in Richtung der Scheibe 12 verfahren ist. Die von dem Scheibenwischarm 2 ausgeübte Armkraft 28 und die von dem Wischblatt 16 auf die Scheibe 12 wirkende Druckkraft 30 sind gegenüber dem Ausführungsbeispiel gemäß Fig. 1A erhöht. Dadurch liegt das Wischblatt 16 vorteilhafterweise wesentlich fester und ebener an der Scheibe 16 an. Dies führt zu einem verbesserten Wischen. Eine Schlierenbildung auf der Scheibe 12 kann vermieden werden.

Der Scheibenwischarm 2 ist hier so ausgestaltet, dass die von ihm ausübbare Armkraft 28 abhängig von einem Zustand des Scheibenwischarms 28 selbst und/oder einem Zustand des Kraftfahrzeugs 10 einstellbar ist. Angaben oder Informationen über diese Zustände werden der Steuerung 26 als Eingangssignale zugeleitet und von der Steuerung 26 in geeigneter Weise verarbeitet, um das Ansteuersignal für den Aktuator 20 zu erzeugen. Besonders vorteilhaft werden der Steuerung 26 hier Angaben über einen momentanen Wischwinkel des Scheibenwischarms 2 und eine momentane Fahrgeschwindigkeit des Kraftfahrzeugs 10 zugeführt. Es ist allerdings ebenso möglich, der Steuerung 26 weitere Angaben zuzuleiten, die sie für die Erzeugung des Ansteuersignals einsetzt. Die Steuerung 26 ist hier vorteilhafterweise so ausgestaltet, dass sie mittels des Wischwinkels Wendelagen des Scheibenwischers 14 bestimmt. In den Wendelagen ändert der Scheibenwischer 14 seine Wischrichtung. Sofern sich der Scheibenwischer 14 einer solchen Wendelage nähert oder sich in einer solchen Wendelage befindet, wird ein geeignetes Ansteuersignal an den Aktuator 20 übermittelt, um die von dem Scheibenwischarm 2 ausgeübte Armkraft 28 zu reduzieren. Dadurch wird der Umlegevorgang des Wischblatts 16 vereinfacht und die Belastung des Wischblatts 16 beim Umlegevorgang verringert. Die Steuerung 26 ist hier ferner so ausgestaltet, dass sie mittels der ihr zugeführten Angabe über die momentane Fahrgeschwindigkeit ein Ansteuersignal für den Aktuator 20 erzeugt, die Armkraft 28 zu erhöhen, sofern die Fahrgeschwindigkeit einen vorgegebenen Grenzwert überschreitet. Der Grenzwert ist dabei vorteilhafterweise so festgelegt, dass bei seinem Überschreiten ggf. die Gefahr besteht, dass sich das Wischblatt 16 von der Scheibe 12 abhebt. Durch das Erhöhen der Armkraft 28, und damit der Auflagekraft 30 des Wischblatts 16 auf der Scheibe 12, soll dies verhindert werden.

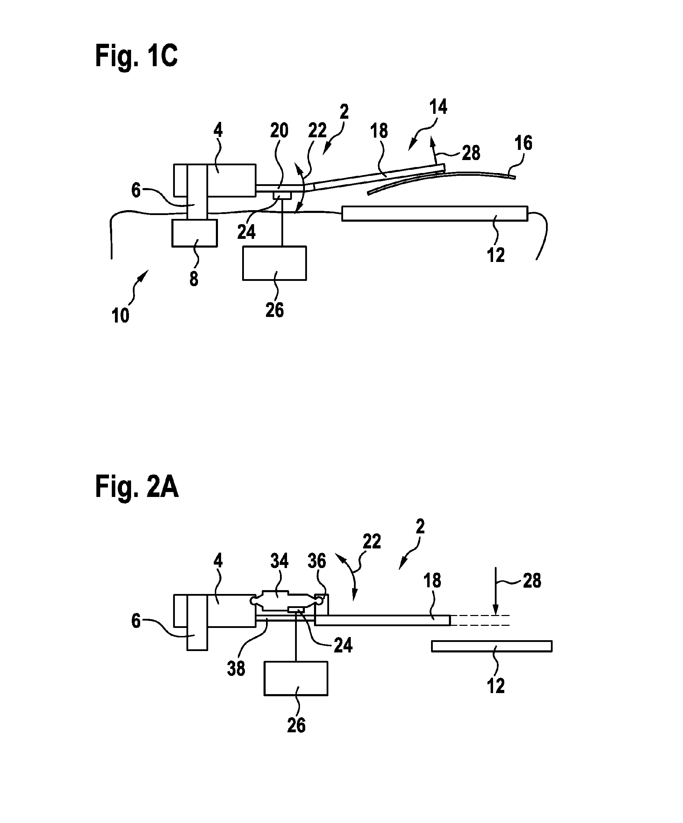

Fig. 1C zeigt eine weitere schematische Darstellung des Ausführungsbeispiels des Scheibenwischarms 2 gemäß Fig. 1A. In der Darstellung nach Fig. 1C befindet sich der Scheibenwischarm 2 in einer Ruheposition, in der er von der Scheibe 12 weggeklappt ist. Das Wischblatt 16 ist dabei von der Scheibe 12 beabstandet. Der Aktuator 20 ist in die Richtung gebogen, die von der Scheibe 12 weg weist. Dies ist in der Fig. 1C durch den Pfeil 22 angedeutet. Der Scheibenwischarm 2 übt dabei eine Armkraft aus, die ebenfalls von der Scheibe 12 weggerichtet ist. Die so gerichtete Armkraft ist in der Fig. 1C durch einen Pfeil 32 angedeutet. Da diese Armkraft 32 im Vergleich zur Armkraft 28 in der Darstellung nach Fig. 1B in die entgegengesetzte Richtung gerichtet ist, kann man ggf. von einer "negativen" Armkraft sprechen. Dabei soll das Wort "negativ" die Umkehr der Richtung andeuten. Eine Auflagekraft wird in dieser Position nicht von dem Wischblatt 16 auf die Scheibe 12 ausgeübt. Der Scheibenwischarm 2 übt in der Ruheposition eine hohe Armkraft 32 aus, da der Scheibenwischarm 2 stabil gehalten werden soll. Die Armkraft 32 kann in dieser Position auch als Haltekraft bezeichnet werden. Zum Einstellen der Ruheposition empfängt der Aktuator 20 von der Steuerung 26 ein geeignetes Ansteuersignal. Die Steuerung erzeugt dieses Ansteuersignal in Abhängigkeit von bestimmten vorgegebenen Kriterien. Solche Kriterien können beispielsweise sein: das Ausschalten eines Motors des Kraftfahrzeugs 10; eine bestimmte vorgegebene Zeit, die nach dem Ausschalten des Motors vergangen ist; 34eine bestimmte vorgegebene Außen-Temperatur, etc. Dadurch ist es beispielsweise möglich, bei besonders warmen oder kalten Temperaturen eine Druckentlastung des Wischblatts 16 vorzunehmen.

Figur 2A-C schematische Darstellungen eines weiteren Ausführungsbeispiels des erfindungsgemäßen Scheibenwischarms 2. Der prinzipielle Aufbau und die Funktionalität des Scheibenwischarms 2 gemäß der Fig. 2A-C entspricht demjenigen des Scheibenwischarms 2 gemäß der Fig. 1A-C. Allerdings ist der biegbare Aktuator 20 hier ersetzt durch einen Aktuator 34, dessen Länge veränderbar ist. Der Aktuator 34 ist hier ein linearer Aktuator und so ausgestaltet, dass er expandieren und kontrahieren kann. Der Aktuator 34 kann seine Länge abhängig von einem entsprechenden Ansteuersignal verlängern und verkürzen. Der Aktuator 34 ist, wie der Aktuator 20 gemäß Fig. 1A-C, zwischen dem Befestigungsteil 4 und dem Gelenkteil 18 angeordnet. Ein Ende des Aktuators 34 ist an dem Befestigungsteil 4 und ein anderes Ende an einem Quersteg 36 befestigt, der an dem dem Befestigungsteil 4 zugewandten Ende des Gelenkteils 18 quer zu dessen Längserstreckung angeordnet ist. Im Ausführungsbeispiel gemäß Fig. 2A-C stellt der Aktuator 34 ein Einstellelement zum Einstellen einer vom Scheibenwischarm 2 ausübbaren Armkraft dar. Parallel zum Aktuator 34 ist zwischen dem Befestigungsteil 4 und dem Gelenkteil 18 ein biegbares Gelenk 38 angeordnet. Das Gelenk 38 ist hier als schmaler Biegebalken ausgestaltet.

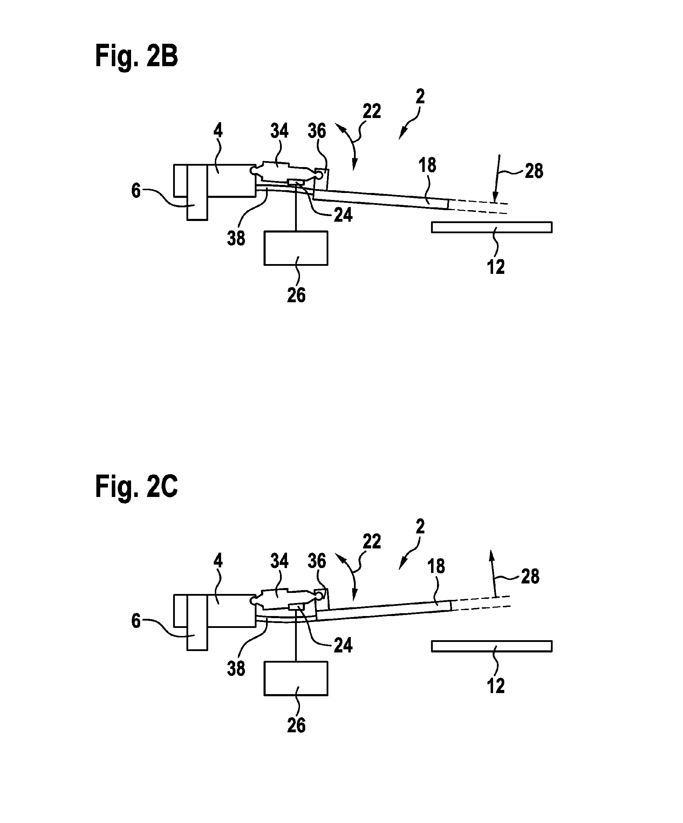

Die Fig. 2A zeigt den Scheibenwischarm 2 in einer Normalstellung, in der der Aktuator 34 seine normale Länge einnimmt und das Gelenk 38 nicht gebogen ist. Die Fig. 2B zeigt den Scheibenwischarm 2 in einer gebogenen Stellung, in der er in Richtung der Scheibe 12 gebogen ist. Dabei übt der Scheibenwischarm 2 eine gegenüber der Stellung gemäß Fig. 2A erhöhte Armkraft aus. In dieser gebogenen Stellung hat der Aktuator 34 expandiert, d. h. seine Länge ist gegenüber seiner Länge gemäß Fig. 2A verlängert. Durch das Expandieren des Aktuators 34 wird auf den Quersteg 36 eine Druckkraft ausgeübt, die dazu führt, dass das Gelenkteil 18 und das Gelenk 38 in Richtung der Scheibe 12 gebogen werden. Die Fig. 2C zeigt den Scheibenwischarm 2 in seiner Ruheposition, in der er von der Scheibe 12 weggeklappt ist. Der Scheibenwischarm 2 ist in Richtung von der Scheibe 12 weg gebogen. Dabei übt der Scheibenwischarm 2 eine Armkraft aus, die in Richtung von der Scheibe 12 weg gerichtet ist. Der Aktuator 34 hat in der Ruheposition kontrahiert, d. h. seine Länge ist gegenüber seiner Länge gemäß Fig. 2A verkürzt. Durch das Kontrahieren des Aktuators 34 wird auf den Quersteg 36 eine Zugkraft ausgeübt. Diese führt dazu, dass das Gelenkteil 18 und das Gelenk 38 in Richtung von der Scheibe 12 weg gebogen werden.

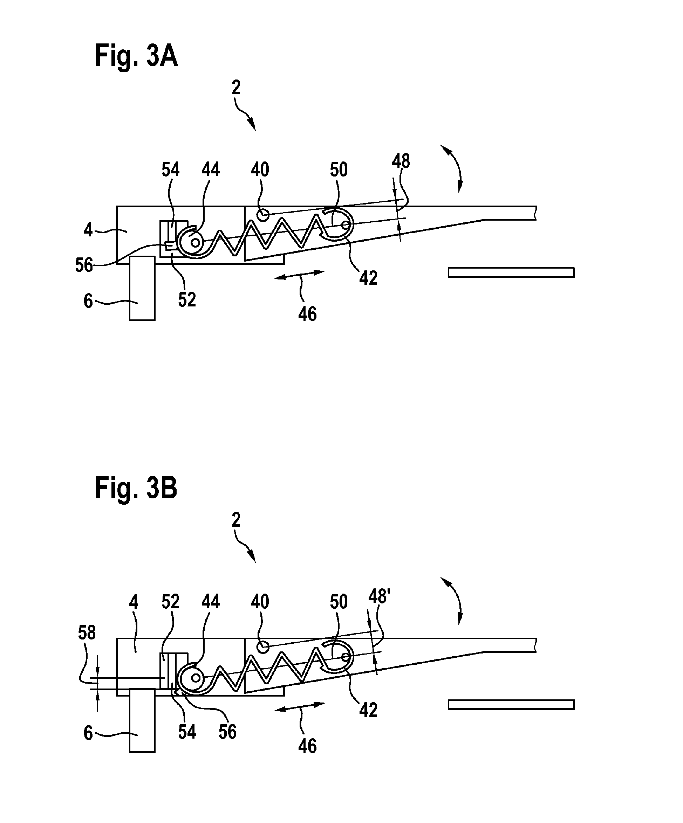

Fig. 3A und 3B zeigen schematische Darstellungen eines weiteren Ausführungsbeispiels des erfindungsgemäßen Scheibenwischarms 2. In diesem Ausführungsbeispiel ist das Gelenkteil 18 drehgelenkig an dem Befestigungsteil 4 befestigt. Dazu weist das Befestigungsteil 4 hier ein Drehgelenk 40 auf, das einen zylinderförmigen Bolzen enthält, auf den eine kreisförmige Aussparung des Gelenkteils 18 aufgesetzt ist. Eine auf den Bolzen aufgesetzte Sperre verhindert ein Herausrutschen des am Bolzen befestigten Gelenkteils 18. Als Einstellelement zum Einstellen der vom Scheibenwischarm 2 ausübbaren Armkraft dient im vorliegenden Ausführungsbeispiel eine Zugfeder 42. Ein Ende der Zugfeder 42 ist an einem Exzenter 44 befestigt, der drehbar an dem Befestigungsteil 4 angebracht ist. Ein anderes Ende der Zugfeder 42 ist an dem Gelenkteil 18 befestigt. Die Zugfeder 42 stellt eine Zugkraft zur Verfügung, die in den Fig. 3A, B durch einen Pfeil 46 angedeutet ist. Die Größe der Zugkraft 46 ist von der Federauslenkung der Zugfeder 42 abhängig. Aufgrund der Zugkraft 46 wird ein auf das Gelenkteil 18 wirkendes Drehmoment M_{D} erzeugt. Dieses Drehmoment M_{D} bewirkt ein Drehen des Gelenkteils 18 in Richtung der Scheibe 12. Das Drehmoment M_{D} ist abhängig von einem Abstand 48 zwischen einer Federachse 50 der Zugfeder 42 und der Drehachse des Drehgelenks 40. Dieser Abstand 48 wird hier auch als Federhebel bezeichnet.

Das Befestigungsteil 4 des Scheibenwischarms 2 gemäß des Ausführungsbeispiels nach Fig. 3A, B weist eine Aussparung 52 auf, an deren oberen Rand ein Aktuator 54 angeordnet ist und sich nach unten erstreckt. Der Aktuator 54 ist ein linearer Aktuator, dessen Länge veränderbar ist. In einem rechts an die Aussparung 52 angrenzenden Randbereich des Befestigungsteils 4 ist der Exzenter 44 drehbar angeordnet. An dem Exzenter 44 ist ein Steg 56 angebracht, der sich in Richtung der Aussparung 52 erstreckt. Eine Seitenfläche des Stegs 56 steht mit dem Aktuator 54 in Wirkverbindung, so dass die Länge des Aktuators 54 die Drehposition des Exzenters 44 bestimmt. In der Fig. 3A ist eine kurze Länge des Aktuators 54 eingestellt. Der Steg 56 des Exzenters 44 steht in einer oberen Position. In der Fig. 3B hat der Aktuator 54 expandiert, d. h. er ist nun länger. Dadurch wurde der Steg 56 nach unten geschoben und der Exzenter verdreht. Der Steg 56 befindet sich in einer unteren Position. Die Längenänderung des Aktuators 54 ist in der Fig. 3B mit dem Bezugszeichen 58 versehen. Durch das Verdrehen des Exzenters 44 wird die Federachse 50 der Zugfeder 42 nach unten verschoben. Dies führt zu einem gegenüber dem Federhebel 48 gemäß Fig. 3A vergrößerten Federhebel, der hier mit dem Bezugszeichen 48' bezeichnet ist. Durch den größeren Federhebel 48' vergrößert sich das auf das Gelenkteil 18 wirkende Drehmoment M_{D}. Dies bedeutet, die von dem Scheibenwischarm 2 ausgeübte Armkraft wird mittels der Ansteuerung des Aktuators 54, und dessen Längenvergrößerung, erhöht. Zusätzlich oder alternativ ist es ebenso möglich, die Federauslenkung und die Zugkraft der Zugfeder 42 einzustellen oder zu verändern, um die von dem Scheibenwischarm 2 ausgeübte Armkraft einzustellen oder zu verändern.

Der Aktuator 54 gemäß des in den Fig. 3A, B dargestellten Ausführungsbeispiels enthält ebenfalls die Empfangsschnittstelle zum Empfangen des Ansteuersignals für den Aktuator 54, die mit der Steuerung verbunden ist. Die Empfangsschnittstelle und die Steuerung sind aus Gründen der Übersichtlichkeit in den Fig. 3A, B nicht dargestellt. Im Gegensatz zu den Aktuatoren 20 und 34 gemäß der anhand der Fig. 1A-C bzw. Fig. 2A-C beschriebenen Ausführungsbeispiele stellt der Aktuator 54 hier nicht direkt ein Einstellelement zum Einstellen einer vom Scheibenwischarm 2 ausübbaren Armkraft dar. Diese Funktion wird hier insbesondere von der Zugfeder 42 ausgeübt. Der Aktuator 54 dient zum indirekten Einstellen der Armkraft. Dazu wirkt der Aktuator 54 auf die Zugfeder 42 und stellt einen ihrer Parameter ein, mit dem die Anordnung und/oder Ausgestaltung der Zugfeder 42 festgelegt ist.

## Patentansprüche

1. Scheibenwischarm (2) für ein Fahrzeug (10), insbesondere ein Kraftfahrzeug, wobei der Scheibenwischarm (2) ein Einstellelement (20, 34, 42) zum Einstellen einer vom Scheibenwischarm (2) ausübbaren Armkraft aufweist und so ausgestaltet ist, dass die Armkraft mittels eines Aktuators (20, 34, 54) einstellbar ist.

2. Scheibenwischarm nach Anspruch 1, **dadurch gekennzeichnet, dass** er so ausgestaltet ist, dass die Armkraft abhängig von einem Zustand des Scheibenwischarms (2) und/oder des Fahrzeugs (10) einstellbar ist.

3. Scheibenwischarm nach Anspruch 2, **dadurch gekennzeichnet, dass** er so ausgestaltet ist, dass die Armkraft abhängig von einem Wischwinkel und/oder einer Fahrgeschwindigkeit des Fahrzeugs (10) einstellbar ist.

4. Scheibenwischarm nach einem der Ansprüche 1 bis 3, **dadurch gekennzeichnet, dass** das Einstellelement den Aktuator (20, 34) aufweist.

5. Scheibenwischarm nach Anspruch 4, **dadurch gekennzeichnet, dass** er ein Befestigungsteil (4) zum Befestigen des Scheibenwischarms (2) an einem Wischantrieb (8) und ein Gelenkteil (18) aufweist, das gelenkig an dem Befestigungsteil (4) angebracht ist, und der Aktuator (20, 34) zwischen dem Befestigungsteil (4) und dem Gelenkteil (18) angeordnet ist.

6. Scheibenwischarm nach Anspruch 4 oder 5, **dadurch gekennzeichnet, dass** der Aktuator als Gelenk (20) ausgestaltet ist.

7. Scheibenwischarm nach Anspruch 5, **dadurch gekennzeichnet, dass** der Aktuator (34) parallel zu einem Gelenk (38) angeordnet ist, das zwischen dem Befestigungsteil (4) und dem Gelenkteil (18) vorhanden ist.

8. Scheibenwischarm nach einem der Ansprüche 1 bis 3, **dadurch gekennzeichnet, dass** der Aktuator (54) so ausgebildet und angeordnet ist, dass er zum Einstellen der Armkraft auf das Einstellelement (42) wirkt.

9. Scheibenwischarm nach Anspruch 8, **dadurch gekennzeichnet, dass** er ein Befestigungsteil (4) zum Befestigen des Scheibenwischarms (2) an einem Wischantrieb (8) und ein Gelenkteil (18) aufweist, das gelenkig an dem Befestigungsteil (4) angebracht ist, und das Einstellelement eine Zugfeder (42) aufweist, die an dem Befestigungsteil (4) und dem Gelenkteil (18) befestigt ist, wobei der Aktuator (54) so ausgebildet und angeordnet ist, dass zum Einstellen der Armkraft ein Parameter der Zugfeder (42) mittels des Aktuators (54) einstellbar ist, der durch eine Anordnung und/oder eine Ausgestaltung der Zugfeder (42) festgelegt ist.

10. Scheibenwischarm nach einem der Ansprüche 1 bis 9, **dadurch gekennzeichnet, dass** er so ausgestaltet ist, dass er mittels des Aktuators (20, 34, 54) in eine Ruheposition bringbar ist, in der er von einer Scheibe (12) des Fahrzeugs (10) weggeklappt ist.
